# EUROPEAN PATENT APPLICATION

(11) **EP 4 744 848 A1**
(43) Date of publication of application: **20.05.2026**
(21) Application number: 26161994.4
(22) Date of filing: 13.11.2023
(51) Int. Cl.: B27L 7/00, B27L 7/06

(54) **LOG SPLITTER ACTUATION ASSEMBLY**

(30) Priority: 15.11.2022 US 202263425508 P
(62) Divisional of application: 23209342.7
(71) Applicant: Techtronic Cordless GP, Anderson, SC 29621 (US)
(72) Inventor: MOULD, Keegen, Anderson SC, 29621 (US); BAKER, David, Anderson SC, 29621 (US); ABARE, Daniel, Anderson SC, 29621 (US)
(74) Representative: Zimmermann & Partner Patentanwälte mbB

(57) **Abstract**

A log splitter is provided. The log splitter includes a housing, a power source comprising at least one removable battery, a drive mechanism electrically coupled to the power source, a support arm extending between a first end and a second end, and a rack coupled to at least a portion of the support arm, the rack configured to move along the support arm in a forward direction to an extended position adjacent the first end of the support arm and a reverse direction toward to a starting position adjacent the second end of the support arm.

## Description

### CROSS-REFERENCE TO RELATED APPLICATIONS

The present application claims priority to U.S. Provisional Patent Application No. 63/425,508 filed on November 15, 2022, the disclosure of which is incorporated by reference herein in its entirety.

### FIELD

The present disclosure relates generally to log splitters and, more particularly, to actuation assemblies and reset systems for powered log splitters.

### BACKGROUND

Log splitters can provide a powered operation for splitting logs into multiple pieces. For example, a driving mechanism, such as a gas or battery powered motor, may drive a ram towards a log that is disposed against a wedge. Further driving brings the ram into contact with the log, and subsequently drives the log past the wedge so that the log is split into two or more pieces. The driving platform may then be reset so the overall operation can be repeated with a new log. While the driving force may be automated via a power source once in operation, the initiation of the driving force on the ram may still be a manual task for the operator. Additionally, if the log splitter stalls during operation, resetting the log splitter may also be a manual task for the operator.

Accordingly, improved log splitters are desired in the art. In particular, log splitters which provide automated actuation assemblies, safety systems, and reset systems would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a log splitter is provided. The log splitter includes a housing, a power source comprising at least one removable battery, a drive mechanism electrically coupled to the power source, a support arm extending between a first end and a second end, and a rack coupled to at least a portion of the support arm, the rack configured to move along the support arm in a forward direction to an extended position adjacent the first end of the support arm and a reverse direction to a starting position adjacent the second end of the support arm.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1A is a perspective view a log splitter in accordance with embodiments of the present disclosure;
FIG. 1B is a top view of the log splitter of FIG. 1A in accordance with embodiments of the present disclosure;
FIG. 1C is a cross-section view of the log splitter of FIG. 1A in accordance with embodiments of the present disclosure;
FIG. 2A is a perspective view of an interior portion of the log splitter of FIG. 1A in a starting position in accordance with embodiments of the present disclosure;
FIG. 2B is a side view of the interior portion of the log splitter of FIG. 1A in an extended position in accordance with embodiments of the present disclosure;
FIG. 3A is a front, perspective view of the actuation assembly of the log splitter of FIGS. 2A-2B in a locked state in accordance with embodiments of the present disclosure;
FIG. 3B is a rear, perspective view of the actuation assembly of FIG. 3A in accordance with embodiments of the present disclosure;
FIG. 3C is a side view of the of the actuation assembly of FIG. 3A in accordance with embodiments of the present disclosure;
FIG. 3D is another side view of the actuation assembly of FIG. 3A in accordance with embodiments of the present disclosure;
FIG. 3E is a back view of the actuation assembly of FIG. 3A in accordance with embodiments of the present disclosure;
FIG. 3F is a front view of the actuation assembly of FIG. 3A in accordance with embodiments of the present disclosure;
FIG. 3G is a top view of the actuation assembly of FIG. 3A in accordance with embodiments of the present disclosure;
FIG. 3H is a bottom view of the actuation assembly of FIG. 3A in accordance with embodiments of the present disclosure;
FIG. 3I is a cross-section view of the actuation assembly of FIG. 3A in accordance with embodiments of the present disclosure;
FIG. 4A is a perspective view of the actuation assembly of FIGS. 2A-2B in an unlocked state in accordance with embodiments of the present disclosure;
FIG. 4B is a side view of the actuation assembly of FIG. 4A in accordance with embodiments of the present disclosure;
FIG. 4C is an interior view of the actuation assembly of FIG. 4A in accordance with embodiments of the present disclosure;
FIG. 5A is a perspective view of the actuation assembly of FIGS. 2A-2B in a rack engaged configuration in accordance with embodiments of the present disclosure;
FIG. 5B is a side view of the actuation assembly of FIG. 5A in accordance with embodiments of the present disclosure;
FIG. 5C is an interior view of the actuation assembly of FIG. 5A in accordance with embodiments of the present disclosure;
FIG. 6A is an exploded view of a trigger lever of the actuation assembly of FIGS. 2A-2B in accordance with embodiments of the present disclosure;
FIG. 6B is a cross-section view of the trigger lever of the actuation assembly of FIGS. 2A-2B in accordance with embodiments of the present disclosure;
FIG. 7A is a side, interior view of the actuation assembly of FIGS. 2A-2B in a rack returning position in accordance with embodiments of the present disclosure;
FIG. 7B is a perspective, interior view of the actuation assembly of FIG. 6A in accordance with embodiments of the present disclosure;
FIG. 7C is a rear view of the actuation assembly of FIG. 6A in accordance with embodiments of the present disclosure;
FIG. 8 is a top view of a housing of the log splitter of FIG. 1A in accordance with embodiments of the present disclosure;
FIG. 9 is cross-section view of the actuation assembly of FIGS. 2A-2B in accordance with embodiments of the present disclosure; and
FIG. 10 is a flow chart of a method of operating the log splitter of FIGS. 1A-1C in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

As used herein, the term "and/or" includes any and all combinations of one or more of the associated listed items.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, a battery or other power source associated with a log splitter can power an electric motor or other drive power mechanism that drives a pulley that moves a belt. The belt spins one or more, such as two, flywheels that are fixed to a common pinion shaft, wherein the flywheels act to store energy mechanically. When splitting a log, the operator moves a safety lever out of the way to permit a trigger lever to be pulled or pushed, which pushes a roller into a rack. Thus, two-handed operation by the operator, or operators, is needed to operate the log splitter. This helps prevent injury to the user who might otherwise position their arms or hands in an unsafe location during actuation (e.g., on the ram, fly wheel, log, etc.).

The rack engages the pinion shaft at a high rate of speed regardless of the speed that the operator manipulates the first lever and the second lever. This decreases chatter and wear on components of the log splitter. Additionally, the operator's input may be disconnected from the engagement action to ensure that any kickback event does not harm, annoy, or cause discomfort to the operator by moving the first lever or the second lever. For example, a kickback event may occur when forces exerted on the rack cause the rack to move upwards or upwards and rearwards. The upwards and/or rearward movement of the rack may force a lever held by the operator to rotate back towards its home position. Such a kickback event can result in a violent movement of the lever held by the operator. For example, the trigger lever may be forced to rotate towards its home position due to not going past vertical, and the upwards force of the rack may exert a torque on the trigger lever, moving it towards its home position.

Additionally, a kickback event may also be caused by friction between the roller, the trigger lever, and the rack when the rack recoils or moves in the reverse direction after striking a log.

After the rack is engaged with the pinion shaft, the rack may be propelled forward, ramming a portion of the rack (e.g., a back plate) into a log positioned against a wedge. The wedge thereby splits the log. Along its linear travel, the rack extends a spring (e.g., located beneath a support arm). Once the rack reaches a certain extension, the rack becomes disengaged from the pinion shaft, and the spring forces the rack back to its original position.

If the log splitter, such as the electric motor or other drive mechanism, stalls, another two-handed operation by the operator, or operators, may be performed. For example, two switches or buttons associated with the electric motor may be activated simultaneously to cause the electric motor to rotate in the reverse direction. Rotation of the electric motor in the reverse direction rotates the pinion in the reverse direction such that the rack is driven back to its original position where the rack may then be disengaged from the pinion shaft. Thus, the log splitter is reset automatically rather than manually by the operator. Additionally, the two-handed operation required to reset the log splitter helps prevent injury to the operator who might otherwise position their arms or hands in an unsafe location (e.g., on the ram, fly wheel, etc.) while the log splitter is being reset and the rack is driven back to its original position.

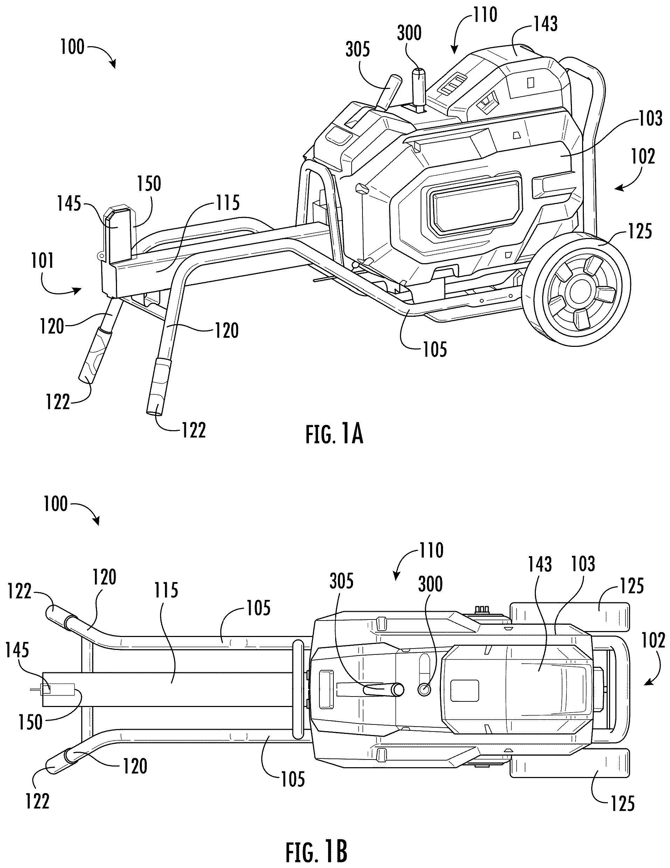

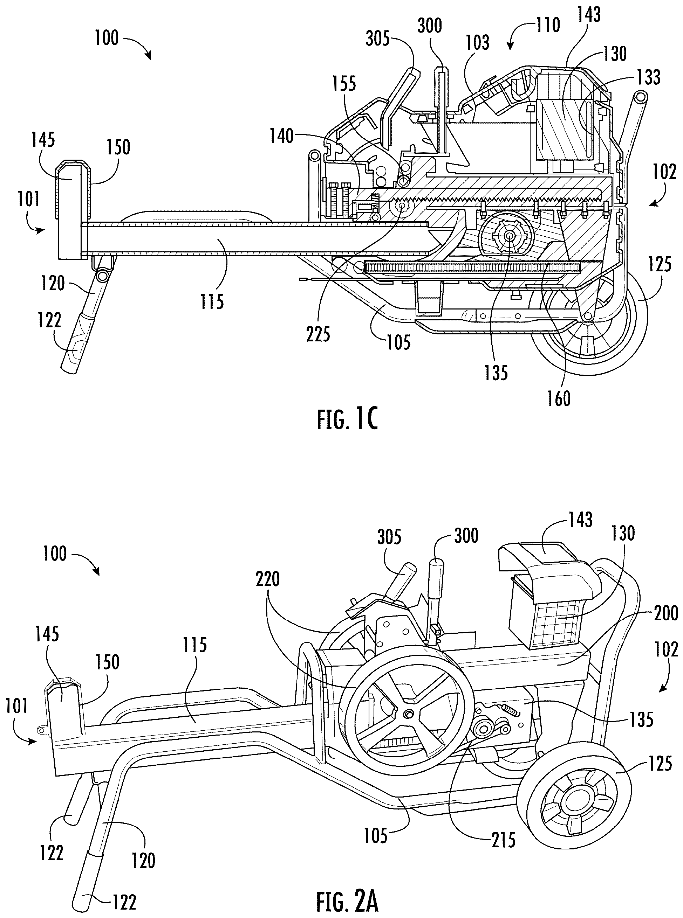

Referring now to the drawings, FIG. 1A illustrates a perspective view a log splitter in accordance with embodiments of the present disclosure. FIG. 1B illustrates a top view of the log splitter of FIG. 1A in accordance with embodiments of the present disclosure. FIG. 1C illustrates a cross-section view of the log splitter of FIG. 1A in accordance with embodiments of the present disclosure.

In at least one example embodiment, a log splitter 100 includes a housing 110 including a base 105 and a removable shell 103. The base 105 may include a support arm 115. The support arm 115 extends between a first end 101 and a second end 102 of the log splitter 100. The support arm 115 may also extend at least partially within the removable shell 103.

In at least one example embodiment, the base 105 includes one or more support legs 120 adjacent the first end 101 of the log splitter 100 and one or more wheels 125 adjacent the second end 102 of the log splitter 100. The one or more support legs 120 may be configured to support at least a portion of the support arm 115. Ends of the one or more support legs 120 adjacent the first end 101 of the log splitter may include one or more handles 122 for an operator, or operators, to grip to lift and move the log splitter using the one or more wheels 125.

In at least one example embodiment, the log splitter 100 includes at least one power source, such as a power source 130, and a drive mechanism 135. The power source 130 may be disposed within the removable shell 103 of the housing 110. The power source 130 may be electrically coupled to the drive mechanism 135 and configured to supply power to the drive mechanism 135. The power source 130 may be removeable and replaceable within the housing 110. For example, the power source 130 may be removed from a compartment 133 of the housing 110 for charging and later reinserted into the compartment 133. In at least one example embodiment, the power source 130 may be inserted within the compartment 133 in multiple orientations. The removable shell 103 of the housing 110 may also include a cover 143 configured to cover the compartment 133 and/or the power source 130. In at least one example embodiment, the power source 130 includes at least one battery. For example, the power source 130 may include at least two batteries connected in parallel. In other example embodiments, the power source 130 may include a permanent battery within the housing 110 that is not removable. In still other example embodiments, the log splitter 100 may include a power cord for plugging the log splitter 100 into an external power source. In still other example embodiments, the log splitter 100 may include one or more removable batteries and a power cord for plugging the log splitter into an external power source. In other example embodiments, the power source may be an engine.

In at least one example embodiment, the log splitter 100 includes a rack 140, as shown in FIG. 1C. The rack 140 is disposed at least partially on the support arm 115. For example, the rack 140 is configured to extend from the housing 110 and move along the support arm 115, as will be discussed in greater detail with respect to FIGS. 2A-2B.

In at least one example embodiment, the log splitter 100 includes a wedge 145 adjacent the first end 101. The wedge 145 may extend perpendicularly from the support arm 115 adjacent the first end 101 of the log splitter 100. The wedge 145 may include any suitable configuration for splitting a log (not shown) into two or more pieces when pushed against and past the wedge 145. For example, in some example embodiments, the wedge 145 includes a tip 150 facing the second end 102 of the log splitter 100. The tip 150 may include a sharpened or angled edge in a vertical orientation, may comprise multiple edges such as in a cross configuration, or may comprise any other suitable design for splitting a log into multiple pieces. In at least one example embodiment, the wedge 145 and/or the tip 150 may be removeable and replaceable. For example, the wedge 145 and/or the tip 150 may be removed and replaced with another of a same or different design.

In at least one example embodiment, a removable or permanent table or tray may be positioned under the log splitter, such as under the support arm 115, to support the log. In some embodiments, such a table or tray may be coupled to the rack 140 so that it translates with the rack (e.g., positioned laterally from the rack 140). In some embodiments, the table or tray may be fixed to the support arm 115 so that it does not move relative to the rack (e.g., positioned laterally from support arm 115 with a slot to not inhibit movement of the rack 140 during its translation along the support arm 115).

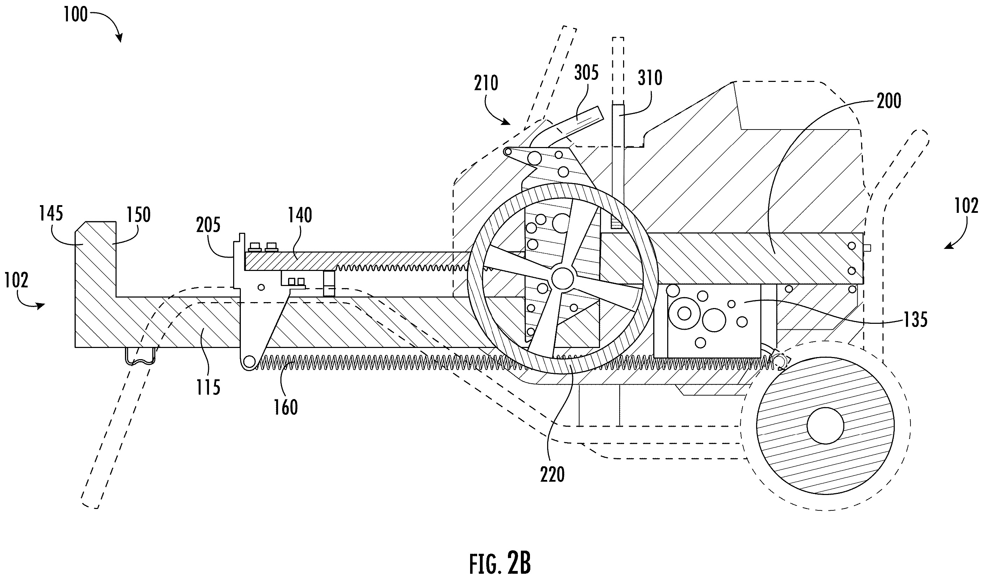

FIG. 2A illustrates a perspective view of an interior portion of the log splitter of FIG. 1A in a starting position in accordance with embodiments of the present disclosure. FIG. 2B illustrates a side view of the interior portion of the log splitter of FIG. 1A in an extended position in accordance with embodiments of the present disclosure.

In at least one example embodiment, the rack 140 may be at least partially disposed within a hollow support 200 of the housing 110. The hollow support 200 may be at least partially within the removable shell 103 of the housing 110 and configured to provide additional structural support to the housing 110 and components within the housing 110. For example, the power source 130 and/or the drive mechanism 135 may be mounted to a portion of the hollow support 200.

In at least one example embodiment, the rack 140 is configured to move along the support arm 115 from a starting position (shown in FIGS. 1 and 2A) towards an extended position (such as the position shown in FIG. 2B). The rack 140 may include a backplate 205. The backplate 205 may be positioned at an end of the rack 140 adjacent the first end 101 of the log splitter 100. The backplate 205 may also be substantially flat and perpendicular to the support arm 115. When the rack 140 is driven in a forward direction towards the first end 101, the backplate 205 is configured to contact an end of a log (not shown), such as a cross-sectional face of the log. As the rack 140 moves along the support arm from the starting position towards the first end 101, such that the rack 140 reaches the extended position shown in FIG. 2B, the log is pushed against the wedge 145 and the tip 150 and the log is split into multiple pieces. In at least one example embodiment, the backplate 205 may be about 1 inch to about 2 inches from the wedge 145 and/or the tip 150 in the extended position.

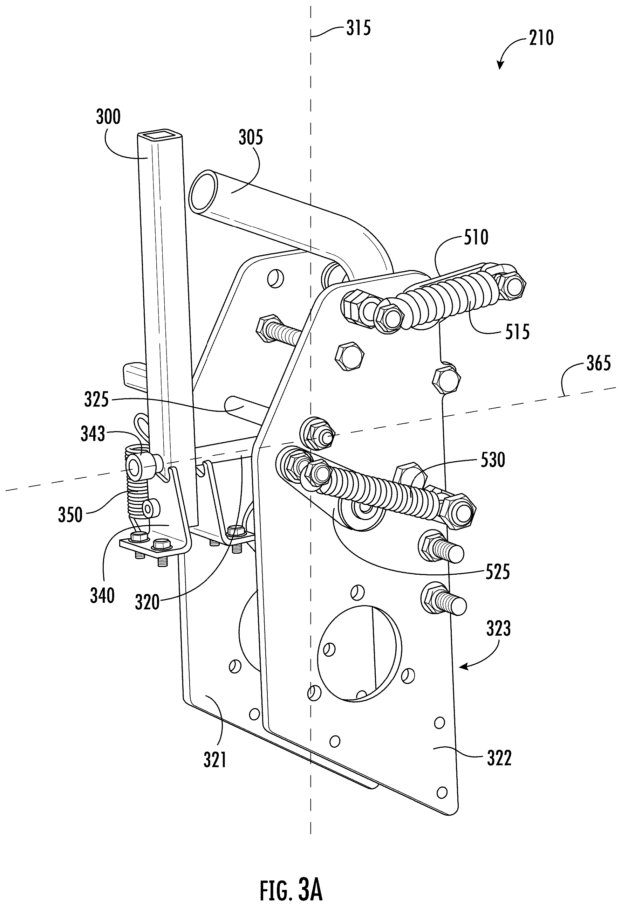

In at least one example embodiment, the log splitter 100 includes an actuation assembly 210. The actuation assembly 210 may be at least partially disposed within the removable shell 103 of the housing 110. The actuation assembly 210 is configured to be mechanically coupled to the drive mechanism 135 and to the rack 140 for driving the rack 140 at least in a forward direction towards the first end 101, such as to the extended position shown in FIG. 2B. The actuation assembly 210 may also be configured to drive the rack 140 in a reverse direction towards the second end 102, such as to the starting position shown in FIG. 2A. The actuation assembly 210 will be described in greater detail with respect to FIGS. 3A-6B, below.

In at least one example embodiment, the drive mechanism 135 may include an electric motor configured to drive a pulley that moves a belt. For example, as shown in FIG. 2A, a belt 215 driven by the drive mechanism 135 spins at least one flywheel 220. In at least one example embodiment, the drive mechanism 135 includes a rack and pinion configuration for driving the rack 140. For example, the at least one flywheel 220 is coupled to a shaft of a pinion 225 (shown in FIG. 1C). When the rack 140 is engaged with the pinion 225, rotation of the at least one flywheel 220 in the forward direction is translated to the pinion 225 such that the rack 140 is propelled forward towards the first end 101. For example, the rack 140 may include a plurality of teeth configured to engage a plurality of teeth of the pinion 225. With reference to FIG. 1C, a roller 155 may be configured to push the rack 140 down to engage the pinion 225 in some example embodiments. Engagement of the rack 140 with the pinion 225 will be described in greater detail with respect to FIGS. 3A-6B, below.

In at least one example embodiment, the log splitter 100 includes a spring, such as a return spring 160, coupled to the rack 140 and configured to bias the rack 140 in the reverse direction and return the rack 140 to its starting position adjacent the second end 102. For example, after the roller 155 is no longer applying force on the rack 140, the rack 140 is disengaged from the pinion 225 and driven in the reverse direction to the starting position by the return spring 160. In other example embodiments, rotation of the at least one flywheel 220 and the pinion 225 in the reverse direction propels the rack 140 in the reverse direction towards the second end 102. Additionally, or alternatively, the drive mechanism 135 may include one or more pistons, belt drives, chain drives, pneumatic drives, or any other suitable drive technology or combinations thereof.

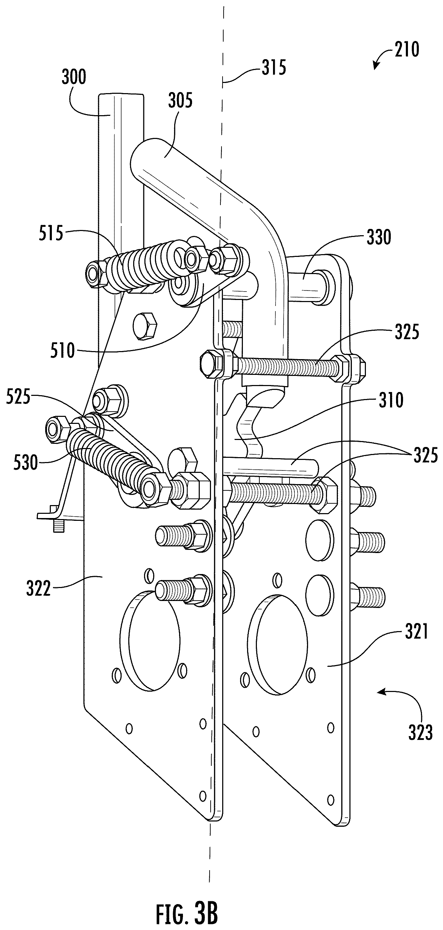

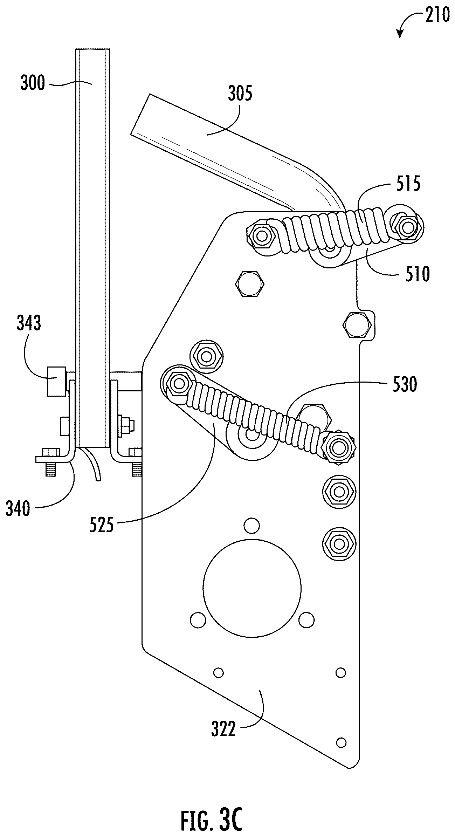

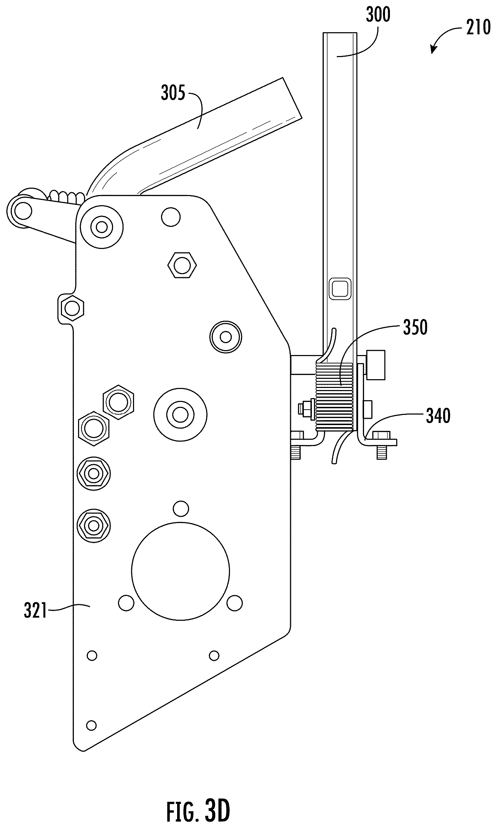

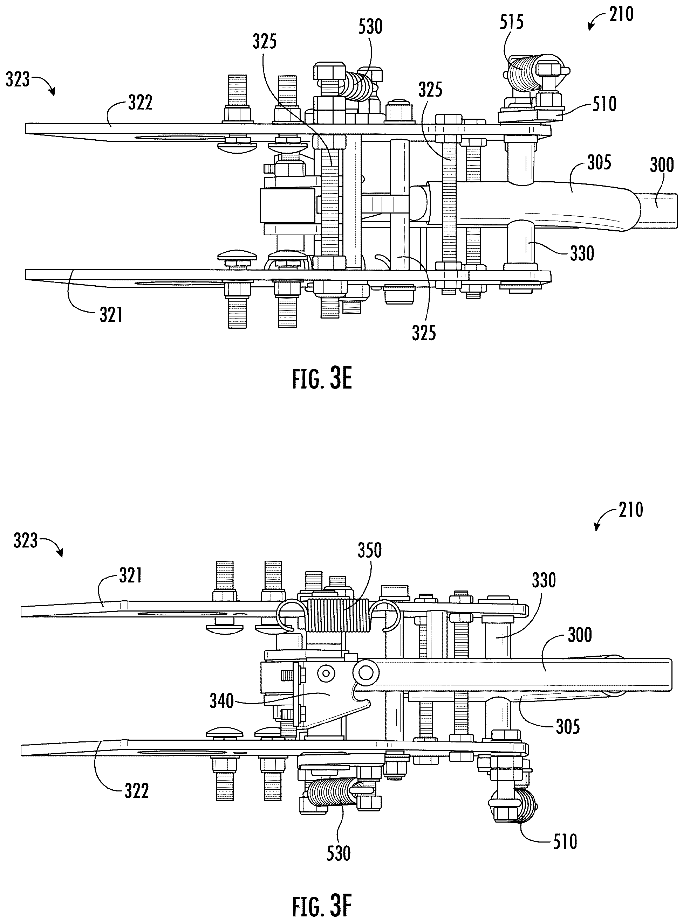

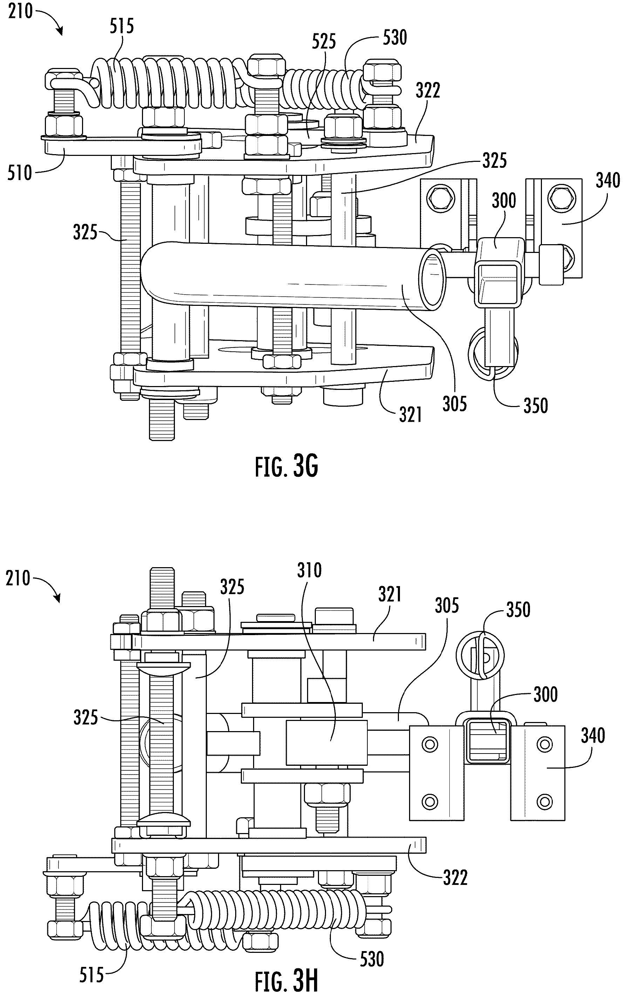

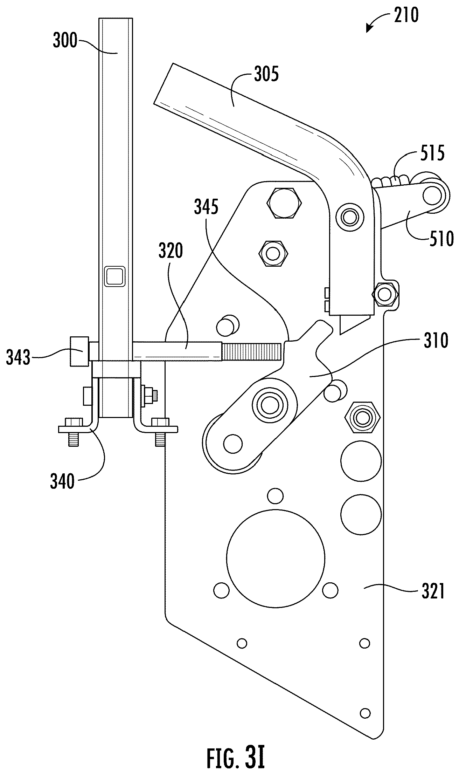

FIG. 3A illustrates a front, perspective view of the actuation assembly of the log splitter of FIGS. 2A-2B in accordance with embodiments of the present disclosure. FIG. 3B illustrates a rear, perspective view of the actuation assembly of FIG. 3A in accordance with embodiments of the present disclosure. FIG. 3C illustrates a side view of the actuation assembly of FIG. 3A in accordance with embodiments of the present disclosure. FIG. 3D illustrates another side view of the actuation assembly of FIG. 3A in accordance with embodiments of the present disclosure. FIG. 3E illustrates a back view of the actuation assembly of FIG. 3A in accordance with embodiments of the present disclosure. FIG. 3F illustrates a front view of the actuation assembly of FIG. 3A in accordance with embodiments of the present disclosure. FIG. 3G illustrates a top view of the actuation assembly of FIG. 3A in accordance with embodiments of the present disclosure. FIG. 3H illustrates a bottom view of the actuation assembly of FIG. 3A in accordance with embodiments of the present disclosure. FIG. 3I illustrates a cross-section view of the actuation assembly of FIG. 3A in accordance with embodiments of the present disclosure.

In at least one example embodiment, the actuation assembly 210 is configured to selectively activate the drive mechanism 135. The actuation assembly 210 can ensure that engagement of the rack 140 to the pinion 225 happens at a high rate of speed regardless of the speed at which an operator manipulates a trigger lever of the actuation assembly 210. This can decrease chatter and wear on the components and ensures a longer tool life. Additionally, the actuation assembly 210 can disconnect the operator's input from the engagement action. This can ensure that any kickback event does not harm or annoy the operator by moving the trigger lever.

With reference to FIGS. 3A-3I, the actuation assembly 210 includes a safety lever 300, a trigger lever 305, and an engagement lever 310. As shown in at least figures 1A-1C, at least a portion of the safety lever 300 and the trigger lever 305 may extend from the removable shell 103 the housing 110 of the log splitter 100 so that they may be accessible by one or more operators. In other example embodiments, one or both of the safety lever 300 and the trigger lever 305 may include a button or other actuator.

In at least one example embodiment, the safety lever 300 is configured to be actuated between a locked state and an unlocked state. For example, the safety lever 300 may be parallel with a vertical axis 315 extending through the actuation assembly 210, as shown in at least FIG. 3A. The safety lever 300 may include an extension 320 extending perpendicularly from the safety lever 300 towards the engagement lever 310. The extension 320 may be positioned adjacent a bottom end of the safety lever 300. As shown in FIG. 3I, the extension 320 is configured to contact the engagement lever 310 in the locked state such that the engagement lever 310 and the trigger lever 305 are prevented from moving. For example, the engagement lever 310 may include a protrusion 345 configured to engage the extension 320 in the locked state. The protrusion 345 may include a triangular, circular, rectangular, or polygonal shape. In the locked state shown in FIGS. 3A-3I, also referred to as a safe configuration, the rack 140 cannot be engaged with the pinion 225.

In at least one example embodiment, the actuation assembly 210 includes an actuation housing 323 for housing and supporting components of the actuation assembly 210, such as the safety lever 300, the trigger lever 305, and the engagement lever 310. The actuation housing 323 may include a first plate 321 and a second plate 322 opposite the first plate 321. The actuation housing may include one or more support bars 325 coupled between the first plate 321 and the second plate 322 to maintain the first plate 321 and the second plate 322 in a spaced relationship. In at least one example embodiment, the one or more support bars 325 may include threaded rods extending through opposing openings or holes in the first plate 321 and the second plate 322 and secured with one or more nuts threaded on ends of the threaded rods outside of the first plate 321 and the second plate 322.

In at least one example embodiment, the actuation housing 323 includes one or more shafts, such as a trigger shaft 330 and an engagement shaft 335. The trigger shaft 330 may couple the trigger lever 305 to the first plate 321 and/or the second plate 322. The trigger lever 305 may also be rotatable about a central axis extending through the trigger shaft 330. Similarly, the engagement shaft 335 may couple the engagement lever 310 to the first plate 321 and/or the second plate 322. The engagement lever 310 may be rotatable about a central axis extending through the engagement shaft 335.

In at least one example embodiment, the safety lever 300 may be coupled to the actuation housing 323 via a bracket 340. For example, the bracket 340 may be configured to receive a bottom end of the safety lever 300. The safety lever 300 may be secured to the bracket 340 by a pin 343 extending through opposing openings in the bracket 340 and an opening in the safety lever 300. For example, the pin 343 may include the extension 320. The safety lever 300 may also be configured to rotate about a central axis extending through the pin 343. In other example embodiments, the bracket 340 may be coupled to a portion of the log splitter 100 within the housing 110 such that the bracket 340 and the safety lever 300 are positioned in front of the actuation assembly 210.

In at least one example embodiment, a safety spring 350 may be coupled to the safety lever 300 and configured to bias the safety lever 300 to the locked state from the unlocked state. For example, the safety lever 300 is configured to return the safety lever 300 to the locked position in a non-actuated state. In at least one example embodiment, the safety spring 350 is coupled between the safety lever 300 and the bracket 340. In other example embodiments, the safety spring 350 may be coupled between the safety lever 300 and the actuation housing 323 or another component of the log splitter 100.

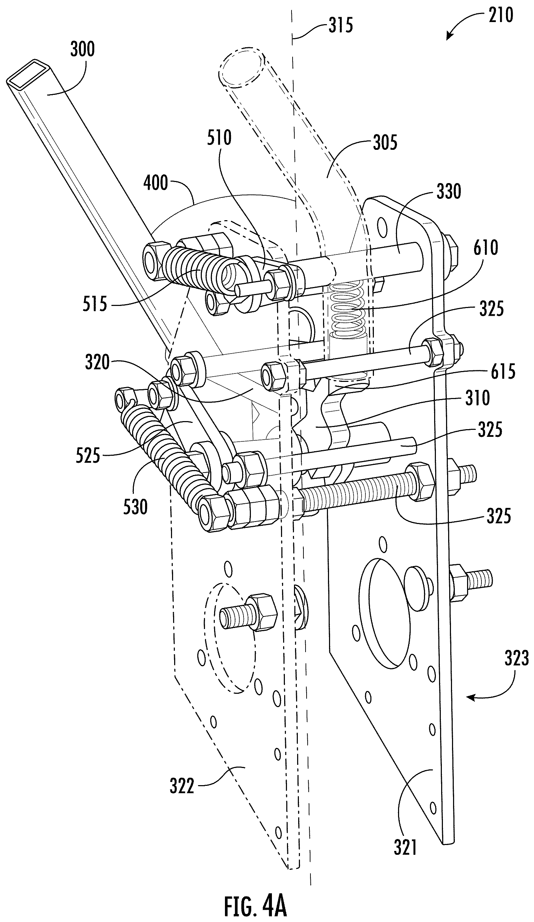

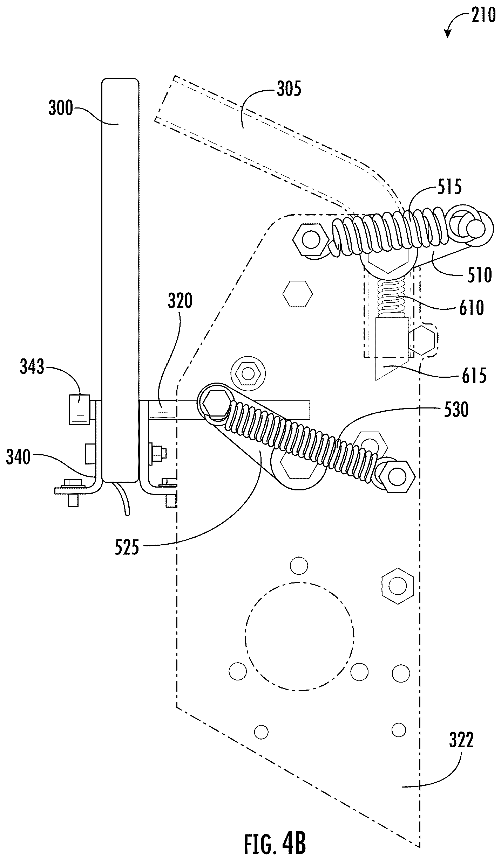

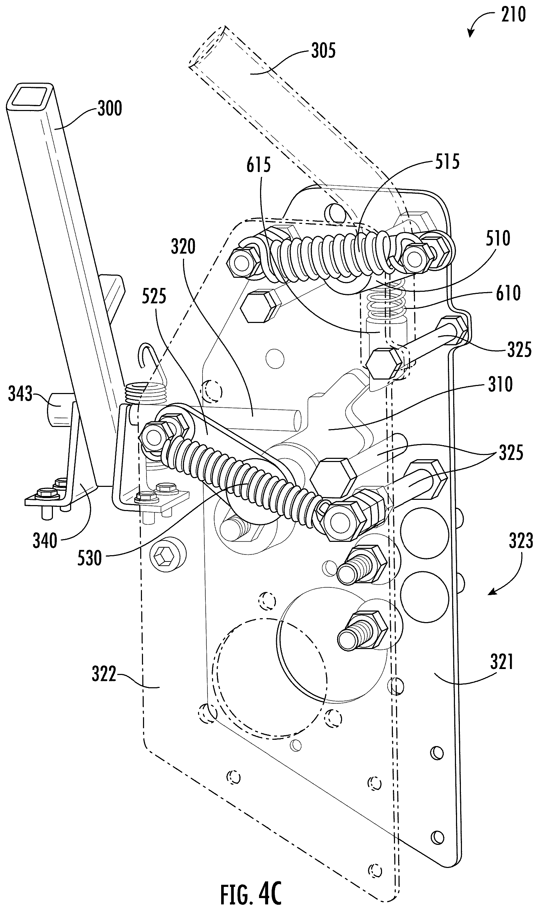

FIG. 4A illustrates a perspective view of the actuation assembly of FIG. FIGS. 2A-2B in an unlocked state in accordance with embodiments of the present disclosure. FIG. 4B illustrates a side view of the actuation assembly of FIG. 4A in accordance with embodiments of the present disclosure. FIG. 4C illustrates an interior view of the actuation assembly of FIG. 4A in accordance with embodiments of the present disclosure.

With reference to FIGS. 4A-4C, the safety lever 300 is configured to be actuated from the locked state to the unlocked state. In the unlocked state, the safety lever 300 may form an angle 400 with the vertical axis 315 extending through the actuation assembly 210. In some example embodiments, the angle 400 may be about 90° or less. In some example embodiments, the angle 400 may be about 45° or less. Rotation of the safety lever 300 disengages the extension 320 from the engagement lever 310, as shown in FIG. 4C. In such a configuration, referred to as a pre-strike configuration, the engagement lever 310 and the trigger lever 305 are free to move or rotate.

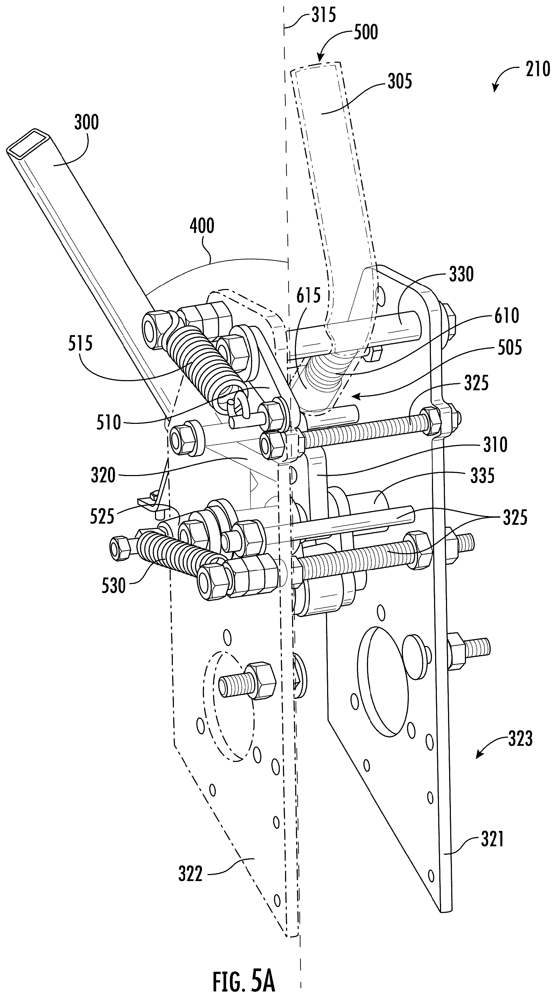

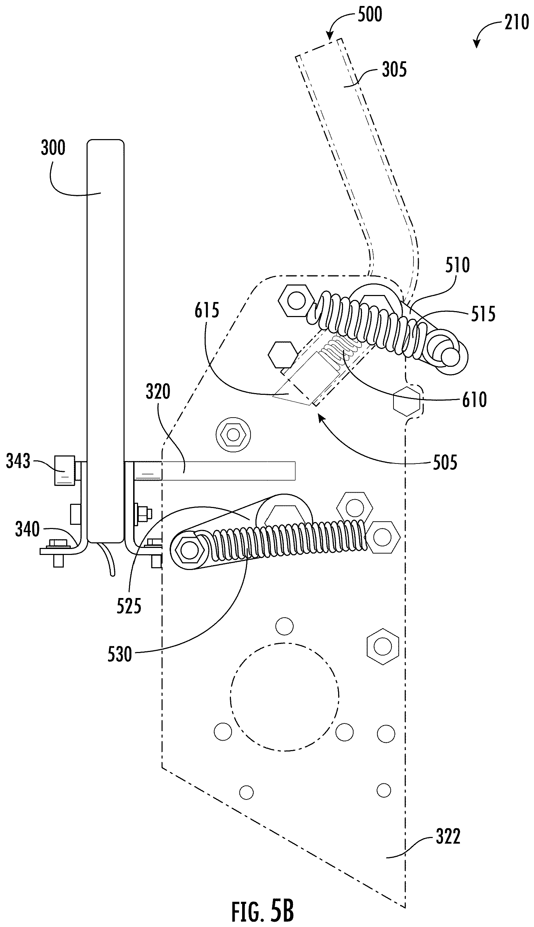

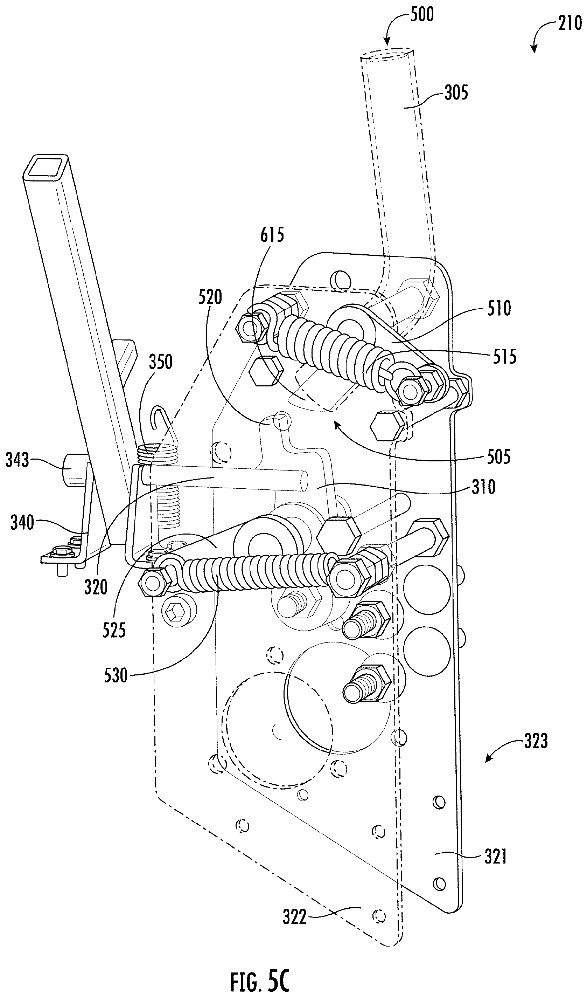

FIG. 5A illustrates a perspective view of the actuation assembly of FIGS. 2A-2B in a rack engaged configuration in accordance with embodiments of the present disclosure. FIG. 5B illustrates a side view of the actuation assembly of FIG. 5A in accordance with embodiments of the present disclosure. FIG. 5C illustrates an interior view of the actuation assembly of FIG. 5A in accordance with embodiments of the present disclosure.

With reference to FIGS. 5A-5C, the trigger lever 305 is configured to be actuated from a normal position (shown in FIGS. 3A-4C) to a forward position. As discussed above with respect to FIGS. 4A-4C, the trigger lever 305 may only be moved to the forward position when the safety lever 300 is in the unlocked state and the extension 320 is moved out of contact with the engagement lever 310.

In at least one example embodiment, the trigger lever 305 includes a first end 500 and a second end 505 opposite the first end 500. At least a portion of the second end 505 of the trigger lever 305 is configured to contact or engage a portion of the engagement lever 310 such that movement of the trigger lever 305 from the normal position to the forward position rotates the engagement lever 310. For example, the first end 500 of the trigger lever 305 may be actuated by an operator in a forward direction such that the second end 505 of the trigger lever 305 moves in an opposite, reverse direction towards the engagement lever 310.

The trigger lever 305 is rotatable about the trigger shaft 330. In at least one example embodiment, a trigger crank 510 is coupled to the trigger lever 305 via the trigger shaft 330. An upper spring 515 may be coupled to the trigger crank 510. The trigger crank 510 and the upper spring 515 may be positioned adjacent the second plate 322 of the actuation housing 323. The upper spring 515 and the trigger crank 510 may be configured to hold the trigger lever 305 in the forward position. For example, the trigger lever 305 moves to the forward position and the upper spring 515 goes over center. Movement of the trigger lever 305 to the forward position may rotate the trigger shaft 330 and the trigger crank 510 and bias the upper spring 515 to an extended position.

In at least one example embodiments, the trigger lever 305 is manually returned to the normal position by the operator. For example, the trigger lever 305 may remain in the forward position until the operator overcomes the force of the upper spring 515 and returns the trigger lever 305 past the halfway point, at which time the upper spring 515 may fully return the trigger lever 305 to the normal position. In other example embodiments, the upper spring 515 may be configured to return the trigger lever 305 to the normal position when the trigger lever 305 is in a non-actuated state. For example, the upper spring 515 may return to its unbiased position (shown in FIGS. 3A-4C), causing the trigger crank 510 to rotate and thereby rotating the trigger shaft 330 and the trigger lever 305 to the normal position.

In at least one example embodiment, movement of the trigger lever 305 to the forward position rotates the engagement lever 310 in a first direction, such as a counter-clockwise direction, as shown in FIG. 5C. The engagement lever 310 may include a protrusion 520. A portion of the second end 505 of the trigger lever 305 may be configured to contact or engage the protrusion 520 when the trigger lever 305 is actuated to the forward position such that the engagement lever 310 is rotated in the first direction.

With reference to FIG. 1C, rotation of the engagement lever 310 in the first direction may cause a roller, such as the roller 155, to push the rack 140 down to engage the pinion 225. With the rack 140 engaged with the pinion 225, the rack 140 may be moved forward towards the first end 101 of the log splitter 100 by the drive mechanism 135 such that a log positioned on the support arm 115 may be split into multiple pieces as the log is moved past the wedge 145, as discussed above with respect to FIGS. 1A-2B.

The engagement lever 310 is rotatable about the engagement shaft 335. In at least one example embodiment, an engagement crank 525 is coupled to the engagement lever 310 via the engagement shaft 335. A lower spring 530 may also be coupled to the engagement crank 525. The engagement crank 525 and the lower spring 530 may be positioned adjacent the second plate 322 of the actuation housing 323. Movement of the engagement lever 310 in the first direction may cause the engagement crank 525 to rotate via the engagement shaft 335 and may cause the lower spring 530 to go over center (as shown in FIGS. 5A-5C).

In at least one example embodiment, the lower spring 530 is configured to maintain the engagement lever 310 in its starting position until the engagement lever 310 is rotated in the first direction by the lower spring 530 stretching past a centerline of the engagement crank 525. Such movement of the lower spring 530 begins to rotate the engagement lever 310 in the first direction. As discussed above, the engagement lever 310 is at least partially rotated in the first direction by the trigger lever 305. During movement of the trigger lever 305, and before engagement of the rack 140 to the pinion 225, the engagement lever 310 is rotated such that the lower spring 530 travels past the centerline of the engagement crank 525. Once the lower springs 530 stretches past the centerline of the engagement crank 525, the lower spring 530 begins to pull the engagement lever 310 faster than the operator is rotating the trigger lever 305. This creates a separation between the engagement lever 310 and the trigger lever 305, as shown in FIG. 5C.

After the trigger lever 305 is disengaged from the engagement lever 310, the trigger lever 305 may be pulled out of the way by the upper spring 515 and the trigger crank 510. Disengagement of the engagement lever 310 from the trigger lever 305 also uncouples the operator from the engagement action. The engagement action includes when the rack 140 engaging the pinion 225. For example, the lower spring 530 moves the engagement lever 310 in the first direction to the fully engaged position faster than the operator can rotate the engagement lever 310 via the trigger lever 305.

Because the operator is uncoupled from the engagement action, the operator may also be isolated from a kickback event. For example, if the engagement lever 310 does not go past vertical before the rack 140 strikes a log, and an upward force on the rack 140 causes the engagement lever 310 to rotate in the second direction and return to its home position, the trigger lever 305 is already disengaged from the engagement lever 310 and the kickback event is isolated from the operator. A kickback may also occur when the rack 140 is moving forwards and the rack 140 is engaged with the pinion 225. However, disengaging the trigger lever 305 from the engagement lever 310 before the engagement action ensures that the operator is disconnected from any kickback event.

After the trigger lever 305 is disengaged from the engagement lever 310 (as shown in FIG. 5C) and the operator is isolated from the engagement action, the lower spring 530 rotates the engagement lever 310 in the first direction until the engagement lever 310 is in the fully engaged position, where the rack 140 is then engaged with the pinion 225.

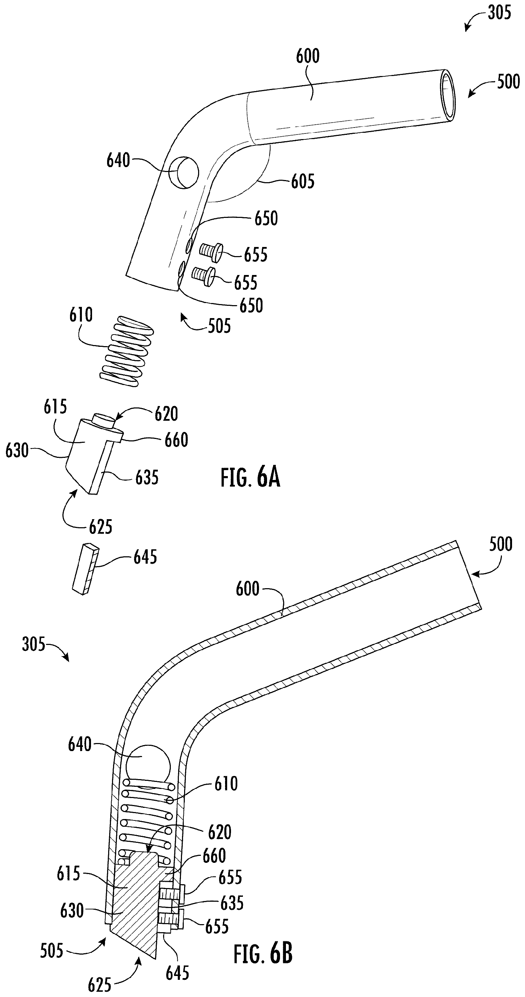

FIG. 6A illustrates an exploded view of a trigger lever of the actuation assembly of FIGS. 2A-2B in accordance with embodiments of the present disclosure. FIG. 6B illustrates a cross-section view of the trigger lever of the actuation assembly of FIGS. 2A-2B in accordance with embodiments of the present disclosure.

In at least one example embodiment, the trigger lever 305 includes a handle 600. The handle 600 may have a substantially cylindrical shape. In other example embodiments, the handle 600 may comprise a rectangular or polygonal shape. In at least one example embodiment, the handle 600 includes a bend or curved portion. For example, the first end 500 and the second end 505 of the trigger lever 305 may form an angle 605. The angle 605 may be about 90° or greater.

In at least one example embodiment, the handle 600 of the trigger lever 305 defines an opening 640. The opening 640 may be configured to receive at least a portion of the trigger shaft 330.

In at least one example embodiment, at least a portion of the handle 600 is hollow. For example, the handle 600 may be configured to receive a trigger spring 610 and a trigger lever latch 615 adjacent the second end 505. The trigger lever latch 615 may include a first end 620 adjacent the trigger spring 610 and a second end 625 opposite the first end and configured to extend from the second end 505 of the trigger lever 305. In at least one example embodiment, the trigger lever latch 615 comprises a generally cylindrical shape. In other example embodiments, the trigger lever latch 615 comprises a rectangular or other polygonal shape.

In at least one example embodiment, the trigger spring 610 is configured to bias the trigger lever latch 615 from a retracted position to a protracted position. In the protracted position, a portion of the second end 625 of the trigger lever latch 615 extends from the second end 505 of the trigger lever, as shown in FIG. 6B. In the retracted position, the second end 625 of the trigger lever latch 615 may be flush with the second end 505 of the handle 600.

In at least one example embodiment, the second end 625 of the trigger lever latch 615 tapers from a first side 630 to a second side 635 opposite the first side to form an angled surface at the second end 625. As shown in FIGS. 4C and 5C, the second side 635 of the trigger lever latch 615 may be configured to contact a portion of the engagement lever 310, such as the protrusion 520, to rotate the engagement lever 310 in the first direction when the trigger lever 305 is actuated to the forward position.

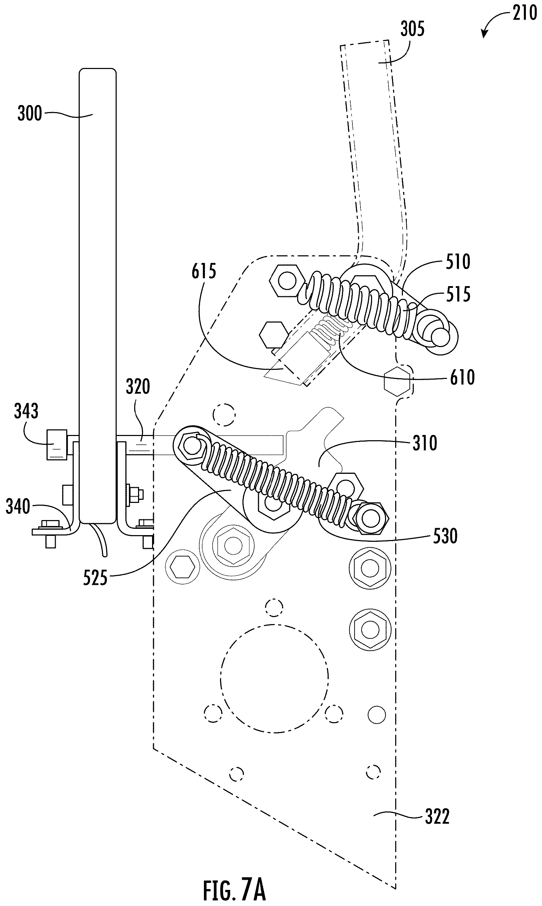

In at least one example embodiment, the trigger lever latch 615 is configured to retract when the trigger lever 305 is actuated from the forward position to the normal position. For example, the angled surface of the trigger lever latch 615 may be configured to contact a portion of the engagement lever 310 when the trigger lever 305 is actuated from the forward position to the normal position. Force exerted by the engagement lever 310, such as by the protrusion 520, may bias the trigger spring 610 and cause the trigger lever latch 615 to retract into the handle 600. Retracting the trigger lever latch 615 into the handle 600 allows the trigger lever 305 to return to the forward position without rotating the engagement lever 310 in the second direction. Additionally, or alternatively, the angled surface at the second end 625 of the trigger lever latch 615 allows the engagement lever 310 to rotate in the second direction without being inhibited by the trigger lever 305 or causing the trigger lever 305 to return to the normal position, as will be discussed with respect to FIGS. 7A-7C, below.

In at least one example embodiment, the trigger lever 305 includes a stopper 645. The stopper 645 may be disposed within the second end 505 of the handle 600 and configured to maintain the trigger lever latch 615 within the second end 505 of the trigger lever 305. For example, the trigger lever latch 615 may include a protrusion 660 configured to contact a top surface of the stopper 645 in the protracted position. In at least one example embodiment, the handle 600 defines one or more holes 650 for receiving one or more fasteners 655. The one or more fasteners 655 may be configured to extend through the one or more holes 650 and one or more corresponding holes defined by the stopper 645 to secure the stopper 645 to an interior surface of the handle 600. In at least one example embodiments, the one or more fasteners 655 includes one or more screws, bolts, or other means for securing the stopper 645 within the handle 600 of the trigger lever 305.

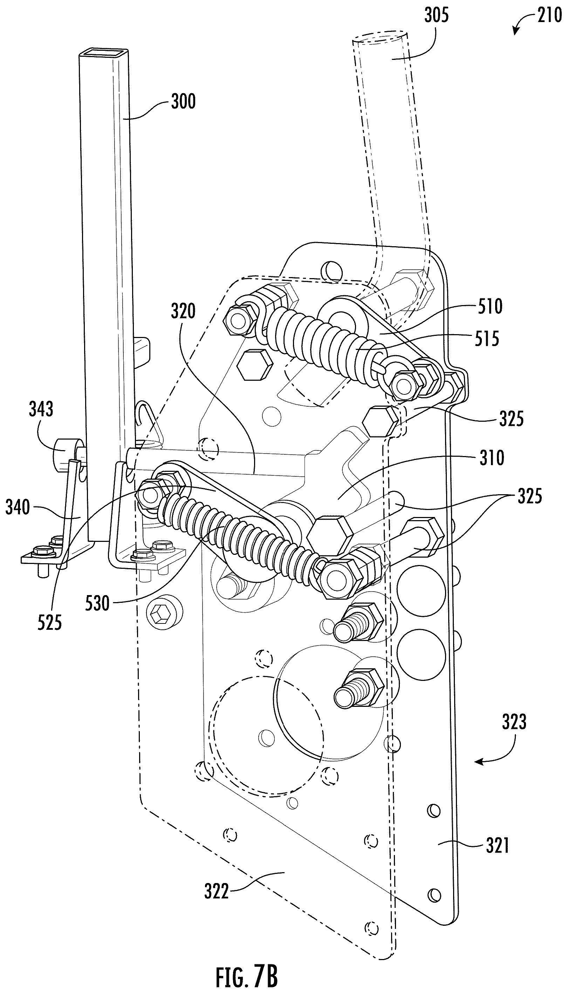

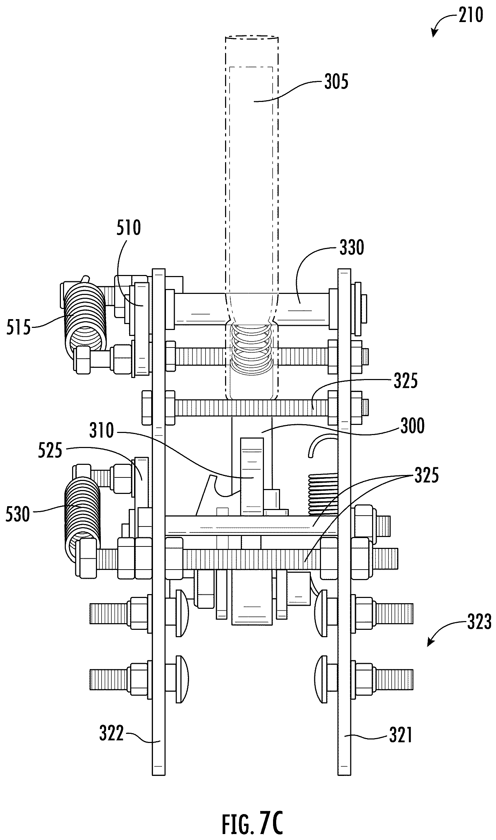

FIG. 7A illustrates a side, interior view of the actuation assembly of FIGS. 2A-2B in a rack returning position in accordance with embodiments of the present disclosure. FIG. 7B illustrates a perspective, interior view of the actuation assembly of FIG. 6A in accordance with embodiments of the present disclosure. FIG. 7C illustrates a rear view of the actuation assembly of FIG. 6A in accordance with embodiments of the present disclosure.

In at least one example embodiment, the engagement lever 310 is configured to return to its starting position after the rack 140 has reached the extended position adjacent the first end 101 of the log splitter 100, as shown in FIG. 2B. In the rack returning configuration, the engagement lever 310 is configured to rotate in the second direction, or clockwise direction, to its starting position. As shown in FIGS. 7A-7B, rotation of the engagement lever 310 in the second direction to its starting position may not change the position of the trigger lever 305.

In at least one example embodiment, the engagement lever 310 is rotatable about the engagement shaft 335. An engagement crank 525 may be coupled to the engagement lever 310 via the engagement shaft 335. A lower spring 530 may also be coupled to the engagement crank 525. The engagement crank 525 and the lower spring 530 may be positioned adjacent the second plate 322 of the actuation housing 323. Movement of the engagement lever 310 in the first direction may cause the engagement crank 525 to rotate via the engagement shaft 335 and may cause the lower spring 530 to go over center (as shown in FIGS. 5A-5C). For example. the lower spring 530 may be biased between an extended position and a retracted position through the rotational travel of the engagement lever 310.

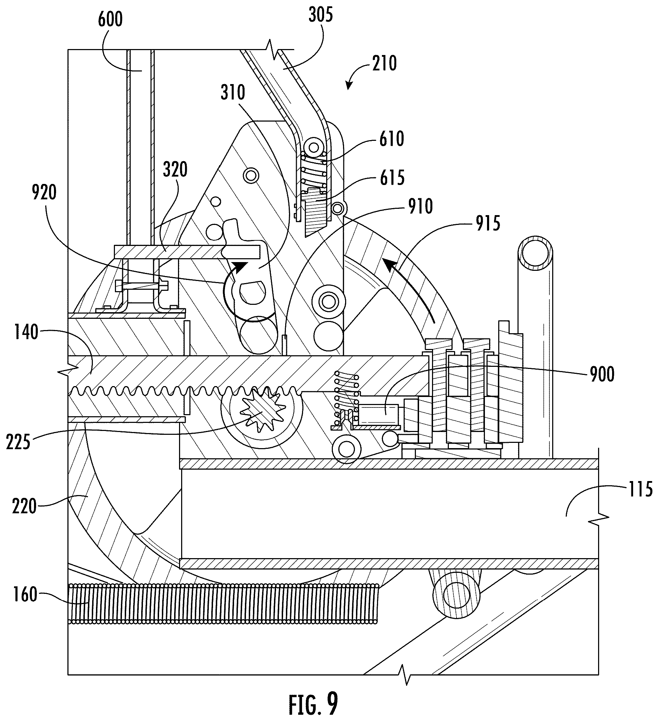

In at least one example embodiment, the rack 140 is pushed upwards past the roller 155 such that the rack 140 is disengaged from the pinion 225. The rack may then be moved in the reverse direction to rotate the engagement lever 310 in the second direction. After the rack 140 is disengaged from the pinion 225, the rack 140 may be moved in the reverse direction, such as by the return spring 160. In still other example embodiments, the rack 140 includes a reset bracket configured to contact the engagement lever 310 and rotate the engagement lever 310 in the second direction as the rack 140 is moved in the reverse direction, as will be discussed with respect to FIGS. 9A-9B, below.

As shown in FIGS. 7A-7C, the engagement lever 310 is returned to its starting position. In at least one example embodiment, the safety lever 300 may also be moved from the unlocked state to the locked state in the rack returning configuration. For example, the extension 320 may be moved into contact with the engagement lever 310, such that rotation of the engagement lever 310 and the trigger lever 305 is prevented.

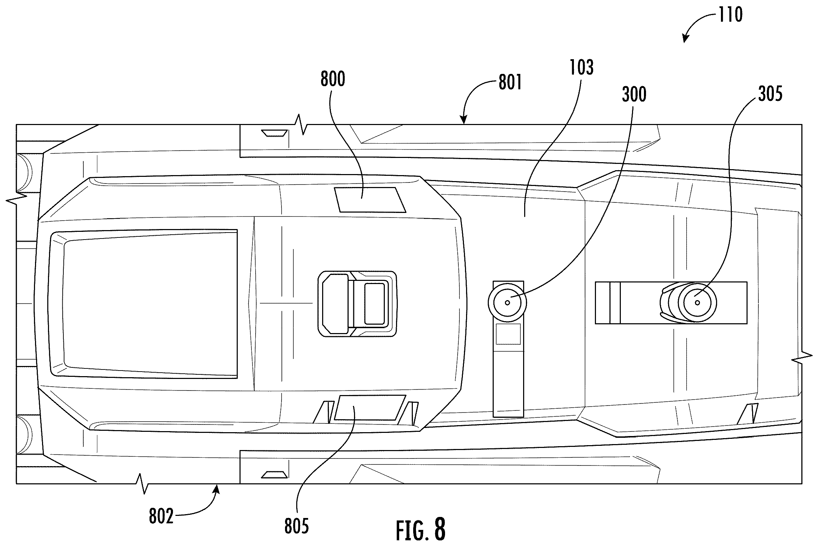

FIG. 8 illustrates a top view of a housing of the log splitter of FIG. 1A in accordance with embodiments of the present disclosure.

In at least one example embodiment, the housing 110 of the log splitter 100 defines a first switch 800 and a second switch 805 configured to be electrically coupled to the drive mechanism 135. For example, the removable shell 103 of the housing 110 may define the first switch 800 and the second switch 805. The first switch 800 may be positioned opposite the second switch 805. For example, the first switch 800 may be adjacent a first side 801 of the housing 110 and the second switch 805 may be adjacent a second side 802 opposite the first side 801 of the housing 110. The first switch 800 and the second switch 805 may include a push button, toggle switch, or any other electrical switch. In at least one example embodiment, the first switch 800 and the second switch 805 are spaced apart a distance that prevents activation of the first switch 800 and the second switch 805 by a single hand of the operator. For example, to simultaneously activate the first switch 800 and the second switch 805, the operator may be required to use two hands.

In at least one example embodiment, simultaneously activating the first switch 800 and the second switch 805 is configured to activate the drive mechanism 135 to drive in the reverse direction. For example, an operator may simultaneously press or actuate the first switch 800 and the second switch 805 to activate the drive mechanism 135. Driving the drive mechanism 135 in the reverse direction may also move the rack 140 in the reverse direction.

In at least one example embodiment, the log splitter 100 may stall during operation. If the rack 140 is in the extended position adjacent the first end 101 when the log splitter 100 stalls, an operator may manually activate the drive mechanism 135 via the first switch 800 and the second switch 805 to return the rack 140 to the starting position. For example, as discussed above, the operator may simultaneously activate the first switch 800 and the second switch 805 to drive the drive mechanism 135 and thereby the rack 140 in the reverse direction.

FIG. 9 illustrates a cross-section view of the actuation assembly of FIGS. 2A-2B in accordance with embodiments of the present disclosure.

In at least one example embodiment, the actuation assembly 210 includes one or more compressible bumpers 900. The one or more compressible bumpers 900 may be coupled to at least a portion of the rack 140 such that the one or more compressible bumpers 900 move along with the rack 140. Because the one or more compressible bumpers move along with the rack 140, the one or more compressible bumpers 900 may be easily accessible and replaced by an operator of the log splitter 100. For example, the one or more compressible bumpers 900 may be accessed and replaced when the rack 140 is moved in the forward direction toward the extended position.

In at least one example embodiment, the one or more compressible bumpers 900 are configured to lower a peak force and sound created when the rack 140 returns to its starting or home position. The one or more compressible bumpers 900 are compressed each cycle of the log splitter 100 and are configured spread the impact energy of the rack 140 returning over a longer duration, which lowers the force and sound generated by the rack 140.

As discussed above with respect to FIG. 8, the log splitter 100 may stall when the rack 140 may be in the extended position. In such embodiments, the return spring 160 may be unable to move the rack 140 in the reverse direction to the starting position because the rack 140 is still engaged with the pinion 225. To move the rack 140 in the reverse position to the starting position, an operator may simultaneously activate the first switch 800 and the second switch 805. Because the rack 140 is engaged with the pinion 225, the drive mechanism 135 may drive the at least one flywheel 220 and thereby the pinion 225 and the rack 140 in the reverse direction, as indicated by arrow 915. For example, the drive mechanism 135 may drive rotation of the at least one flywheel 220. A pinion shaft 905 may be coupled between the at least one flywheel 220 and the pinion 225. Rotation of the pinion shaft 905 may drive rotation of the pinion 225 to move the rack 140 in the reverse direction.

In at least one example embodiment, a reset bracket 910 extends from at least a portion of the rack 140. For example, the reset bracket 910 may extend perpendicularly from a length of the rack 140. As the rack 140 moves in the reverse direction, the reset bracket 910 is configured to contact the engagement lever 310 and rotate the engagement lever in the second direction, as indicated by arrow 920. For example, the reset bracket 910 rotates the engagement lever 310 in the clockwise direction to the starting position shown in FIGS. 7A-7C. Rotation of the engagement lever 310 in the second direction to the starting position may cause a roller, such as the roller 155 shown in FIG. 1C, to move upward so that the rack 140 is disengaged from the pinion 225. After the actuation assembly 210 and the log splitter 100 are returned to their starting positions, a new log may be placed on the support arm 115 for splitting.

In at least one example embodiment, the one or more compressible bumpers 900 allow the rack 140 to travel past the starting or home position and reset the engagement lever 310 to its home position. Because the operator is disconnected from the engagement action, as discussed above, the engagement lever 310 cannot be directly manipulated by the operator, such as by operating the trigger lever 305. If the reset bracket 910 hit the engagement roller during engagement, this would slow down or stop engagement. Thus, the reset bracket 910 must be forward of the engagement roller when the engagement lever 310 is in the fully engaged position and the rack 140 is in the starting or home position. However, the reset bracket 910 must be able to push backwards on the engagement lever 310 in order to return the engagement lever 310 to its home position if the cycle is stopped before it is finished (such as the case of a stall). As discussed above, simultaneously activating the first switch 800 and the second switch 805 may cause the drive mechanism 135 to drive the at least one flywheel 220 to spin backwards. The inertia of the at least one flywheel 220 and torque of the drive mechanism 135 together drive the rack 140 rearward, compressing the one or more compressible bumpers 900 enough that the reset bracket 910 travels rearward past the starting position or home position of the rack 140 and rotates the engagement lever 310 far enough such that the lower spring 530 trips over center and rotates the engagement lever 310 the reset of the way in the second direction to the starting position.

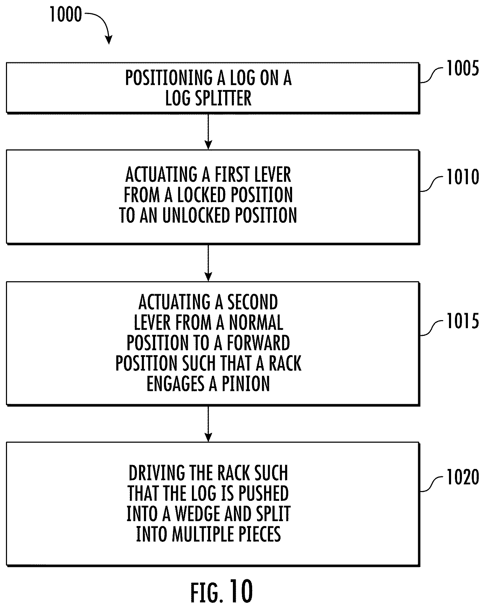

FIG. 10 is a flow chart of a method of operating the log splitter of FIGS. 1A-1C in accordance with embodiments of the present disclosure.

In at least one example embodiment, a method 1000 for operating a log splitter, such as the log splitter 100, includes positioning a log on a log splitter at 1005, actuating a first lever from a locked position to an unlocked position at 1010, actuating a second lever from a normal position to a forward position such that a rack engages a pinion at 1015, and driving the rack such that the log is pushed into a wedge and split into multiple pieces at 1020.

In at least one example embodiment, positioning a log on a log splitter at 1005 includes positioning the log on the support arm 115 of the log splitter 100. For example, the log may be positioned on the support arm 115 between the wedge 145 and the backplate 205.

In at least one example embodiment, actuating a first lever from a locked position to an unlocked position at 1010 includes moving the safety lever 300 from the locked state shown in FIGS. 3A-3I to the unlocked state shown in FIGS. 4A-4B. In the unlocked state, the extension 320 of the safety lever 300 is disengaged from the engagement lever 310 such that the engagement lever 310 and the trigger lever 305 are rotatable.

In at least one example embodiment, actuating a second lever from a normal position to a forward position at 1015 such that a rack engages a pinion includes moving the trigger lever 305 from the normal position (shown in FIGS. 3A-4C) to the forward position (shown in FIGS. 5A-5C. As the trigger lever 305 is rotated from the normal position to the forward position, the trigger lever 305 is configured to contact the engagement lever 310 and rotate the engagement lever 310 in the first direction.

During rotation of the engagement lever 310, the trigger lever 305 is uncoupled from the engagement lever, as shown in FIG. 5C. For example, after the trigger lever 305 has rotated the engagement lever 310 such that the lower spring 530 moves past the centerline of the engagement crank 525, the lower spring 530 pulls the engagement lever 310 in the first directions to the fully engaged position faster than the trigger lever 305 is rotating. Once the engagement lever has reached the fully engaged position, the rack 140 is engaged with the pinion 225. The trigger lever 305 may also return to the normal position. For example, the trigger lever 305 may be manually moved to the normal position from the forward position by the operator of the log splitter 100.

In at least one example embodiment, the drive mechanism 135 spins the at least one flywheel 220. The at least one flywheel 220 is coupled to a shaft of the pinion 225 and configured to drive rotation of the pinion 225. After the rack 140 engages the pinion 225, rotation of the pinion 225 drives the rack 140 in the forward direction. The backplate 205 of the rack 140 pushed the log along the support arm 115 towards the first end 101 of the log splitter. As the log moves towards the first end 101, the log is pushed into the tip 150 of the wedge 145 and split into multiple pieces.

In at least one example embodiment, the rack 140 is driven forward towards the first end 101 of the log splitter by the pinion 225 until the momentum of the rack 140 is overcome by the return spring 160. The return spring 160 is configured to return the rack 140 to the starting position adjacent the second end 102 of the log splitter 100. For example, as the rack 140 is driven in the reverse direction by the return spring 160, the rack 140 strikes the engagement lever 310 and the roller 155 with a force grater than that of the lower spring 530 holding the engagement lever 310 in the fully engaged position. This causes the engagement lever 310 to rotate in the second direction to its starting position. During rotation of the engagement lever 310 in the second direction, the rack 140 slides past the engagement lever 310 and the roller 155 to the starting position of the rack 140 adjacent the second end 102 of the log splitter 100. In such a position, the rack 140 is disengaged from the pinion 225 as the rack moves in the reverse direction to the starting position,

Further aspects of the invention are provided by one or more of the following embodiments:
In accordance with one example embodiment, a log splitter is provided. The log splitter includes a housing, a power source, a motor within the housing and electrically coupled to the power source, a support arm, a rack coupled to at least a portion of the support arm, and an actuation assembly at least partially within the housing and coupled to the motor and the rack. The power source may include at least one battery. The support arm extends between a first end and a second end. The rack is configured to move along the support arm in a forward direction to an extended position adjacent the first end of the support arm and a reverse direction toward to a starting position adjacent the second end of the support arm. The actuation assembly is configured to move the rack at least in the forward direction.

The log splitter of any one or more of the example embodiments, wherein the actuation assembly includes a safety lever actuatable between a locked state and an unlocked state and a trigger lever actuatable from a normal position to a forward position when the safety lever is in the unlocked state. The trigger lever engages the rack with a pinion for movement of the rack in the forward direction in the unlocked state.

The log splitter of any one or more of the example embodiments, wherein rotation of the pinion is driven by the motor to move the rack in the forward direction.

The log splitter of any one or more of the example embodiments, further comprising a biasing member coupled to the rack. The biasing member moves the rack in the reverse direction from the extended position to the starting position.

The log splitter of any one or more of the example embodiments, wherein the battery is disposed within the housing.

The log splitter of any one or more of the example embodiments, wherein the battery is removable.

The log splitter of any one or more of the example embodiments, further including a wedge adjacent the first end of the support arm. The wedge extends perpendicular to a length of the support arm. The wedge includes a tip extending toward the rack and the tip includes an angled edge for splitting a log into two or more pieces.

The log splitter of any one or more of the example embodiments, wherein an end of the rack adjacent the first end of the support arm includes a back plate. The back plate is configured to drive a log positioned on the support arm into the wedge. The tip of the wedge is configured to split the log into two or more pieces.

In accordance with another example embodiment, an actuation assembly for moving a rack of a log splitter is provided. The actuation assembly includes a safety lever actuatable between a locked state and an unlocked state, an engagement lever rotatable in a first direction when the safety lever is in the unlocked state, and a trigger lever. At least a portion of the safety lever contacts the engagement lever in the locked state such that rotation of the engagement lever is prevented. The trigger lever contacts at least a portion of the engagement lever and is actuatable from a normal position to a forward position when the safety lever is in the unlocked state. The trigger lever rotates the engagement lever in the first direction in the unlocked state.

The actuation assembly of any one or more of the example embodiments, further including a roller actuatable between an engaged position and a disengaged position based on rotation of the engagement lever. The roller contacts the rack of the log splitter in the engaged position.

The actuation assembly of any one or more of the example embodiments, wherein in the engaged position, the rack contacts a pinion and a motor coupled to the pinion drives rotation of the pinion to move the rack in a forward direction and in the disengaged position, a biasing member coupled to the rack moves the rack in a reverse direction.

The actuation assembly of any one or more of the example embodiments, wherein the rack includes a reset bracket. The reset bracket contacts the engagement lever and rotates the engagement lever in a second direction when the rack moves in the reverse direction.

The actuation assembly of any one or more of the example embodiments, further including a safety spring coupled to the safety lever, an engagement crank coupled to the engagement lever, a lower spring coupled to the engagement crank, a trigger crank coupled to the trigger lever, and an upper spring coupled to the trigger crank. The safety spring biases the safety lever to the locked state from the unlocked state. The lower spring rotates the engagement lever via the engagement crank in the first direction (e.g., between the engaged position and the disengaged position). The upper spring rotates the trigger lever via the trigger crank between the forward position and the normal position.

The actuation assembly of any one or more of the example embodiments, wherein the safety lever is parallel with a length of the trigger lever in the locked state and the safety lever forms an angle with the length of the trigger lever in the unlocked state.

The actuation assembly of any one or more of the example embodiments, wherein the trigger lever includes a trigger lever latch actuatable between a protracted position and a retracted position and a trigger spring. A first end of the trigger lever latch contacts the engagement lever in the protracted position. The trigger spring contacts a second end of the trigger lever latch opposite the first end and biases the trigger lever latch from the retracted position to the protracted position.

The actuation assembly of any one or more of the example embodiments, wherein the trigger lever latch tapers from a first side to a second side opposite the first side such that the second end of the trigger lever latch includes an angled surface. The second side of the trigger lever contacts the engagement lever and rotates the engagement lever in the first direction when the trigger lever moves from the normal position to the forward position. The angled surface of the trigger lever contacts the engagement lever such that the trigger lever latch is retracted when the trigger lever moves from the forward position to the normal position.

The actuation assembly of any one or more of the example embodiments, wherein the safety lever returns to the locked state when in a non-actuated state and the trigger lever returns to the normal position when in a non-actuated state.

In accordance with another example embodiment, a return system of a log splitter is provided. The return system includes an actuation assembly coupled to a rack of the log splitter, a motor coupled to the actuation assembly, a first switch electrically coupled to the motor, and a second switch electrically coupled to the motor. The actuation assembly is configured to move the rack in a forward direction to a forward position and a reverse direction to a rear position. The motor drives the rack in the forward direction and the reverse direction via the actuation assembly. Simultaneously activating the first switch and the second switch drives the motor in the reverse direction such that the rack moves in the reverse direction to the rear position.

The return system of any one or more of the example embodiments, wherein the actuation assembly includes a pinion coupled to the motor and configured to engage the rack and an engagement lever rotatable between a first position and a second position. The engagement lever engages the rack with the pinion in the second position.

The return system of any one or more of the example embodiments, wherein the rack comprises a reset bracket extending from an upper surface of the rack. The reset bracket rotates the engagement lever from the second position to the first position such that the rack is disengaged from the pinion in the first position.

The return system of any one or more of the example embodiments, further including one or more compressible bumpers actuatable between a protracted position and a retracted position. The one or more compressible bumpers allow movement of the rack in the retracted position.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A log splitter (100), comprising:
a housing (110);
a power source (130), the power source (13) comprising at least one removable battery;
a drive mechanism (135) electrically coupled to the power source (130);
a support arm (115) extending between a first end (101) and a second end (102); and
a rack (140) coupled to at least a portion of the support arm (115), the rack (140) configured to move along the support arm (115) in a forward direction to an extended position adjacent the first end (101) of the support arm (115) and a reverse direction to a starting position adjacent the second end (102) of the support arm (115).

2. The log splitter (100) of claim 1, wherein the housing (110) comprises a base (105) and a removable shell (103), and the base (105) comprises the support arm (115).

3. The log splitter (100) of claim 1, wherein the drive mechanism (135) comprises:
an electric motor configured to drive a pulley that moves a belt (215);
a flywheel (220) driven by the belt (215); and
a pinion (225) coupled to the flywheel (220) for driving the rack (140).

4. The log splitter (100) of claim 1, further comprising, an actuation assembly (210) at least partially within the housing (110) and coupled to the drive mechanism (135) and the rack (140), the actuation assembly (210) configured to move the rack (140) at least in the forward direction.

5. The log splitter (100) of claim 4, wherein the actuation assembly (210) comprises:
a safety lever (300) actuatable between a locked state and an unlocked state; and
a trigger lever (305) actuatable from a normal position to a forward position when the safety lever (300) is in the unlocked state, wherein the trigger lever (305) engages the rack (140) with a pinion (225) for movement of the rack (140) in the forward direction in the unlocked state.

6. The log splitter (100) of claim 5, wherein rotation of the pinion (225) is driven by the drive mechanism (135) to move the rack (140) in the forward direction.

7. The log splitter (100) of claim 5, further comprising an engagement lever (310) rotatable between a first position and a second position, wherein the engagement lever (310) engages the rack (140) with the pinion (225) in the second position.

8. The log splitter (100) of claim 7, wherein the rack (140) comprises a reset bracket (910) extending from an upper surface of the rack (140), wherein the reset bracket (910) rotates the engagement lever (310) from the second position to the first position such that the rack (140) is disengaged from the pinion (225) in the first position.

9. The log splitter (100) of claim 1, further comprising a biasing member (160) coupled to the rack (140), wherein the biasing member (160) moves the rack (140) in the reverse direction from the extended position to the starting position.

10. The log splitter (100) of claim 1, wherein the at least one removable battery is disposed within the housing (110).

11. The log splitter (100) of claim 1, further comprising:
a wedge (145) adjacent the first end (101) of the support arm (115), the wedge (145) extending perpendicular to a length of the support arm (115);
wherein the wedge (145) includes a tip (150) extending toward the rack (140), the tip (150) including an angled edge for splitting a log into two or more pieces.

12. The log splitter (100) of claim 11, wherein:
an end of the rack (140) adjacent the first end (101) of the support arm (115) comprises a back plate (205), the back plate (205) configured to drive a log positioned on the support arm (115) into the wedge (145); and
the tip (150) of the wedge (145) is configured to split the log into two or more pieces.

13. The log splitter (100) of claim 1, further comprising:
a first switch (800) electrically coupled to the drive mechanism (135); and
a second switch (805) electrically coupled to the drive mechanism (135);
wherein simultaneously activating the first switch (800) and the second switch (805) drives the drive mechanism (135) in the reverse direction such that the rack (140) moves in the reverse direction to the starting position.
